# EUROPÄISCHE PATENTSCHRIFT

(11) **EP 1 900 156 B1**
(45) Veröffentlichungstag und Bekanntmachung des Hinweises auf die Patenterteilung: **22.02.2012**
(21) Anmeldenummer: 06762425.4
(22) Anmeldetag: 05.07.2006
(51) Int. Cl.: H04L 12/28, H04W 88/06, H04W 52/04

(54) **KOMMUNIKATIONSSYSTEM UND VERFAHREN ZUM BETRIEB EINES KOMMUNIKATIONSSYSTEMS**
COMMUNICATIONS SYSTEM AND METHOD FOR OPERATING A COMMUNICATIONS SYSTEM
SYSTEME DE COMMUNICATION ET PROCEDE POUR FAIRE FONCTIONNER UN SYSTEME DE COMMUNICATION

(30) Priorität: 05.07.2005 DE 102005031390
(43) Veröffentlichungstag der Anmeldung: 19.03.2008
(60) Teilanmeldung: 11006018.3
(73) Patentinhaber: Telefónica Germany GmbH & Co. OHG, 80992 München (DE)
(72) Erfinder: ZHANG, Zhigang, 41564 Kaarst (DE)
(74) Vertreter: Herrmann, Uwe
(86) Internationale Anmeldenummer: PCT/EP2006/006567
(87) Internationale Veröffentlichungsnummer: WO 2007/003430

(56) Entgegenhaltungen:
- WO-A-01/03392
- DE-U1- 20 315 593

## Beschreibung

Die Erfindung betrifft ein Kommunikationssystem mit wenigstens einem mobilen Endgerät, das Mittel aufweist, mittels derer das mobile Endgerät gemäß einem ersten Kommunikationsstandard eines drahtlosen Kommunikationssystems und gemäß einem zweiten Kommunikationsstandard eines drahtlosen Kommunikationssystems betreibbar ist. Die Erfindung betrifft ferner ein Verfahren zum Betreiben eines solchen Kommunikationssystems.

Aus dem Stand der Technik ist es bekannt, dass Nutzer mobiler Endgeräte in einem bestimmten für die Nutzer definierten Teilnehmergebiet zu besonderen Konditionen telefonieren oder andere Dienstleistungen nutzen können, wohingegen dies nicht der Fall ist, wenn sich die Nutzer außerhalb ihres jeweiligen Teilnehmergebietes befinden. Es ist bekannt, dass für die Nutzer ein oder mehrere solcher Teilnehmergebiete definiert werden können, und dass beispielsweise eine besonders günstige Vergebührung erfolgt, wenn sich der betreffende Nutzer in einem seiner Teilnehmergebiete aufhält.

Um bestimmten zu können, ob sich der Nutzer mit seinem mobilen Endgerät in einer der für ihn definierten Teilnehmergebiete befindet, kann vorgesehen sein, dass charakteristische Koordinaten der Funkzelle übermittelt werden, die mit den das Teilnehmergebiet definierenden Daten verglichen werden. Auf diese Weise kann festgestellt werden, ob die Koordinaten in dem Bereich liegen, der für den Nutzer als Teilnehmergebiet vorgesehen ist, d.h. ob sich das mobile Endgerät in dem oder in einem der Teilnehmergebiete befindet oder nicht.

Bei dem vorgenannten, aus dem Stand der Technik bekannten Kommunikationssystem wird das mobile Endgerät unabhängig von seinem Aufenthaltsort, d.h. sowohl innerhalb als auch außerhalb eines Teilnehmergebietes nach einem Mobilfunkstandard, wie z.B. nach dem GSM-Standard betrieben.

Es sind des Weiteren Kommunikationssysteme bekannt, bei denen das mobile Endgerät in Abhängigkeit seines Aufenthaltsortes bzw. des verfügbaren Netzes nach unterschiedlichen Mobilfunkstandards arbeitet. Solche Endgeräte sind z.B. in Form von Dual-Mode-Handys bekannt, die vollkommen unterschiedliche Standards unterstützen. Ein solches Handy könnte beispielsweise für GSM und DECT oder GSM und AMPS ausgelegt sein.

Es sind ferner mobile Endgeräte bekannt, die sowohl einen Mobilfunkstandard, wie z.B. GSM oder UMTS, als auch WLAN unterstützen. Derartige mobile Endgeräte können beispielsweise dazu genutzt werden, zu Hause oder im Büro per WLAN zu kommunizieren, und außerhalb dieser Bereiche per GSM oder UMTS über das Mobilfunknetz. Ein derartiges Kommunikationssystem umfasst einen WLAN-Router, der über DSL per Kabel mit dem Festnetz verbunden ist. Der WLAN-Router kommuniziert mit dem mobilen Endgerät via WLAN, sobald sich das mobile Endgerät in dem von WLAN abgedeckten Funkbereich befindet. Ist dies nicht der Fall, wird die Kommunikation von und zu dem mobilen Endgerät mittels des Mobilfunknetzes abgewickelt. Ein Vorteil dieses Systems besteht darin, dass keine Indoor-Versorgung durch das Mobilfunknetz erforderlich ist, da das mobile Endgerät im Indoor-Bereich per WLAN kommuniziert. Ein solches System ist in WO 01/03392 A1 beschrieben.

Es ist die Aufgabe der vorliegenden Erfindung ein Kommunikationssystem der eingangs genannten Art dahingehend weiterzubilden, dass dessen Aufbau und Anwendung vereinfacht wird.

Diese Aufgabe wird durch ein Kommunikationssystem mit den Merkmalen des Anspruchs 1 sowie durch ein Verfahren mit den Merkmalen des Anspruchs 18 gelöst.

Danach ist wenigstens eine Kommunikationseinheit vorgesehen, die gemäß dem genannten, zweiten Kommunikationsstandard sowie gemäß einem weiteren Kommunikationsstandard eines drahtlosen Kommunikationssystems betreibbar ist, und die Konvertierungsmittel aufweist, mittels derer die Signale des zweiten Kommunikationsstandards in Signale des weiteren Kommunikationsstandards und umgekehrt konvertierbar sind. Die Kommunikationseinheit verfügt über Sende- und Empfangsmittel, mittels derer die Kommunikationseinheit gemäß dem zweiten Kommunikationsstandard sowie gemäß dem weiteren Kommunikationsstandard betreibbar ist. Ferner ist wenigstens eine Schalteinheit vorgesehen, die in bevorzugter Ausgestaltung der Erfindung in Abhängigkeit von der räumlichen Anordnung von mobilem Endgerät und Kommunikationseinheit zueinander die Aktivierung des ersten oder des zweiten Betriebszustandes des mobilen Endgerätes bewirkt.

Vorzugsweise handelt es sich bei dem ersten Kommunikationsstandard um einen Mobilfunkstandard.

Die Kommunikationseinheit steht mit dem mobilen Endgerät unter Nutzung des zweiten Kommunikationsstandards in Verbindung, sofern dies die räumliche Anordnung zwischen mobilem Endgerät und der Kommunikationseinheit ermöglicht. Sie konvertiert die im Rahmen der Kommunikation mit dem mobilen Endgerät entstehenden Signale in Signale eines weiteren Kommunikationsstandards eines drahtlosen Kommunikationssystems bzw. Netzes und umgekehrt. Die Kommunikationseinheit empfängt und sendet die Signale des weiteren Kommunikationsstandards drahtlos, was den erheblichen Vorteil mit sich bringt, dass kein Festnetzanschluss benötigt wird, wodurch das Kommunikationssystem eine erhebliche Vereinfachung erfährt. Ein weiterer Vorteil besteht darin, dass keine Indoor-Versorgung mit dem Mobilfunknetz erforderlich ist, mit dem das mobile Endgerät in seinem ersten Betriebszustand kommuniziert.

Das erfindungsgemäße Kommunikationssystem ermöglicht die Nutzung der mobilen Endgeräte derart, dass diese in ihrem ersten Betriebszustand mit dem Mobilfunknetz kommunizieren und dass diese in ihrem zweiten Betriebszustand nicht mit dem Mobilfunknetz, sondern mit der Kommunikationseinheit kommunizieren, wobei der zweite Betriebszustand beispielsweise dann eingestellt wird, wenn erkannt wird, dass sich das mobile Endgerät in dem seitens der Kommunikationseinheit abgedeckten Bereich befindet.

Weitere Einzelheiten und Vorteile der Erfindung sind Gegenstand der Unteransprüche.

In einer Ausgestaltung der Erfindung ist vorgesehen, dass die Schalteinheit in Abhängigkeit der räumlichen Anordnung von mobilem Endgerät und Kommunikationseinheit eine Aktivierung des ersten oder des zweiten Betriebszustandes des mobilen Endgerätes vornimmt. Besonders vorteilhaft ist es, wenn ein Umschalten von dem ersten auf den zweiten Betriebszustand dann erfolgt, wenn die Kommunikationseinheit das mobile Endgerät erfasst, d.h. wenn sich das mobile Endgerät in dem Empfangsbereich der Kommunikationseinheit befindet.

In einer Ausführung der Erfindung entspricht der weitere Kommunikationsstandard, in dem die Kommunikationseinheit drahtlos kommuniziert, dem ersten Kommunikationsstandard, in dem das mobile Endgerät in seinem ersten Betriebszustand mit dem Mobilfunknetz kommuniziert.

Ebenso ist denkbar, dass es sich bei dem weiteren Kommunikationsstandard, gemäß dem die Kommunikationseinheit betreibbar ist, und bei dem ersten Kommunikationsstandard, in dem das mobile Endgerät in seinem ersten Betriebszustand kommuniziert, um unterschiedliche Kommunikationsstandards handelt.

Hinsichtlich der verwendeten Kommunikationsstandards bestehen keine Beschränkungen. Denkbar ist beispielsweise, dass es sich bei dem ersten Kommunikationsstandard und/oder bei dem weiteren Kommunikationsstandard um den GSM- oder UMTS-Standard handelt. Dies bedeutet, dass die Kommunikationseinheit in dem zweiten Betriebszustand des mobilen Endgerätes unter Nutzung des zweiten Kommunikationsstandards mit dem mobilen Endgerät kommuniziert und nach Konvertierung der Signale in der Konvertierungseinheit in einem üblichen Mobilfunkstandard, wie z.B. GSM oder UMTS mit einem Mobilfunknetz kommuniziert, so dass die Kommunikation von und zu dem mobilen Endgerät drahtlos über die Kommunikationseinheit verläuft, die ihrerseits drahtlos mit einer weiteren Einheit, vorzugsweise mit einer Sende- und Empfangsstation eines Mobilfunknetzes kommuniziert.

Von der Erfindung sind nicht nur derzeitige Mobilfunkstandards, wie GSM oder UMTS, sondern selbstverständlich auch zukünftige Mobilfunkstandards umfasst.

In einer weiteren Ausgestaltung der Erfindung ist vorgesehen, dass die Reichweite des nach dem zweiten drahtlosen Kommunikationsstandard, wie z.B. WLAN, arbeitenden Kommunikationssystems geringer ist als die Reichweite des nach dem ersten und/oder nach dem weiteren Kommunikationsstandard, wie z.B. GSM oder UMTS, arbeitenden und ebenfalls auf drahtloser Übertragung basierenden Kommunikationssystems. Denkbar ist beispielsweise, dass die Kommunikation gemäß dem zweiten drahtlosen Kommunikationsstandard nur für bestimmte räumliche Bereiche, wie z.B. eine Wohnung oder ein Büro in Betracht kommt, während die Kommunikation mittels des mobilen Endgerätes außerhalb dieser Bereiche unter Nutzung des ersten Kommunikationsstandards, wie z.B. GSM oder UMTS erfolgt.

Die Reichweite des nach dem zweiten Kommunikationsstandard arbeitenden Systems kann beispielsweise im Bereich bis 500 m, vorzugsweise im Bereich bis 200 m und besonders bevorzugt im Bereich bis 100 m liegen.

Bei dem zweiten drahtlosen Kommunikationsstandard, in dem das mobile Endgerät mit der Kommunikationseinheit kommuniziert, kann es sich um WLAN bzw. WLAN/WIFI oder Bluetooth handeln. WIFI ist eine Zertifizierung von WLANs nach dem Standard 802.11b, die von der WECA, der WIFI-Dachorganisation, durchgeführt wird. Mit dieser Zertifizierung wird die Interoperabilität von WLAN-Produkten bestätigt, die dem Standard 802.11 b gemäß arbeiten. In dieser Ausgestaltung der Erfindung erfolgt über WLAN nicht nur ein Datenaustausch, sondern auch die Übertragung von Sprache (VoWIFI).

In einer weiteren Ausgestaltung der Erfindung sind Mittel vorgesehen, die während der Nutzung des mobilen Endgerätes ein Handover beim Wechsel zwischen dem ersten und dem zweiten drahtlosen Kommunikationsstandard bereitstellen. Somit ist es möglich, dass ohne dass dies zu einer Verschlechterung der Qualität der Verbindung oder gar zu einem Abbruch der Verbindung führt, ein Wechsel des Kommunikationsstandards erfolgt, d.h. dass ein Wechsel zwischen dem ersten und dem zweiten Kommunikationsstandard nahtlos erfolgt.

Besonders vorteilhaft ist es, wenn Prüfmittel vorgesehen sind, mittels derer prüfbar ist, ob das mobile Endgerät gemäß seinem zweiten Betriebszustand arbeitet, d.h. ob es sich in dem Empfangsbereich der Kommunikationseinheit befindet.

Diese Prüfmittel können sich in dem mobilen Endgerät befinden. Alternativ oder zusätzlich können die Prüfmittel in einem der Kommunikationsnetze angeordnet sein.

Besonders vorteilhaft ist es, wenn Mittel vorgesehen sind, die in Abhängigkeit der in dem Prüfmittel vorgenommenen Prüfung ein für den Nutzer des mobilen Endgerätes wahrnehmbares Signal generieren. Dabei kann es sich z.B. um eine akustische oder optisch wahrnehmbare Anzeige handeln, die dem Nutzer anzeigt, in welchem Betriebszustand sich sein mobiles Endgerät befindet, d.h. ob die Kommunikation nach dem ersten oder dem zweiten Kommunikationsstandard durchgeführt wird.

Auch ist es denkbar, dass Mittel vorgesehen sind, die in Abhängigkeit der in dem Prüfmittel vorgenommenen Prüfung Einfluss auf die Vergebührung der mit dem mobilen Endgerät getätigten Telefonate nimmt. Dabei besteht die Möglichkeit, dass die Nutzung des mobilen Endgerätes im ersten Betriebszustand, in dem mittels eines Mobilfunknetzes telefoniert wird zu einer höheren Gebühr erfolgt, als in dem zweiten Betriebszustand, in dem die Kommunikation über die Kommunikationseinheit durchgeführt wird. Dies kann sich auch auf Dienste oder Funktionalitäten beziehen, die für den Nutzer des mobilen Endgerätes in Abhängigkeit davon zur Verfügung stehen, in welchem Betriebszustand sich das mobile Endgerät befindet, d.h. ob es mit der Kommunikationseinheit oder mit einer Station des Mobilfunknetzes kommuniziert.

In weiterer Ausgestaltung der Erfindung ist vorgesehen, dass die Kommunikationseinheit ein oder mehrere austauschbare Module aufweist, die die Kommunikation der Kommunikationseinheit gemäß dem zweiten und/oder gemäß dem weiteren drahtlosen Kommunikationsstandard bewirken. In einer solchen Ausgestaltung der Erfindung ist eine Anpassung der verwendeten Kommunikationsstandard besonders einfach durch Austausch eines oder beider Module möglich. Dies gilt in weiterer Ausgestaltung der Erfindung vorzugsweise sowohl für die Kommunikation zwischen der Kommunikationseinheit und dem mobilen Endgerät als auch für die Kommunikation zwischen der Kommunikationseinheit und einem Netz, insbesondere einem Mobilfunknetz.

Von der Erfindung sind selbstverständlich auch Ausführungen umfasst, bei denen keines der Module oder nur eines der Module austauschbar sind.

Besonders vorteilhaft ist es, wenn die Kommunikationseinheit tragbar ausgeführt ist. Sie kann so ohne weiteres in einer Wohnung oder in einem Büro aufgestellt werden. Die Tragbarkeit ist jedoch selbstverständlich kein die Erfindung beschränkendes Merkmal. Auch nicht mobile Kommunikationseinheiten sind von der Erfindung umfasst.

Die Kommunikationseinheit kann über eine eigene Stromversorgung, wie beispielsweise einen Akku, verfügen und in diesem Fall autark betrieben werden. Alternativ oder zusätzlich kann vorgesehen sein, dass die Kommunikationseinheit an ein Stromnetz anschließbar ist.

Die Erfindung betrifft ferner ein Verfahren zum Betreiben eines Kommunikationssystems nach einem der Ansprüche 1 bis 19, wobei die Kommunikation mittels des mobilen Endgerätes in einem ersten Betriebszustand gemäß dem ersten Kommunikationsstandard und in einem zweiten Betriebszustand gemäß dem zweiten Kommunikationsstandard durchgeführt wird, wobei das mobile Endgerät in dem ersten Betriebszustand mit einem Mobilfunknetz und in dem zweiten Betriebszustand mit der Kommunikationseinheit kommuniziert, die die Signale des zweiten drahtlosen Kommunikationsstandards in die Signale des weiteren Kommunikationsstandards und umgekehrt konvertiert und die Signale des weiteren Kommunikationsstandards drahtlos sendet bzw. empfängt.

Wie oben ausgeführt hängt die Wahl des Betriebszustandes des mobilen Endgerätes in bevorzugter Ausgestaltung der Erfindung von der Entfernung des mobilen Endgerätes von der Kommunikationseinheit ab.

Es kann vorgesehen sein, dass bei geringer Entfernung zwischen dem mobilen Endgerät und der Kommunikationseinheit das mobile Endgerät mit der Kommunikationseinheit gemäß dem zweiten Kommunikationsstandard kommuniziert und bei demgegenüber größerer Entfernung zwischen dem mobilen Endgerät und der Kommunikationseinheit das mobile Endgerät gemäß dem ersten Kommunikationsstandard ohne Nutzung der Kommunikationseinheit mit dem Mobilfunknetz kommuniziert.

Besonders vorteilhaft ist es, wenn bei einem Wechsel von dem ersten in den zweiten Betriebszustand oder umgekehrt ein Handover vorgenommen wird.

Um den Nutzer des mobilen Endgerätes davon zu informieren, in welchem Betriebszustand das mobile Endgerät arbeitet, können Anzeigemittel vorgesehen sein, die dem Nutzer des mobilen Endgerätes anzeigen, ob sich das mobile Endgerät in dem ersten oder zweiten Betriebszustand befindet. Dabei kann es sich z.B. um eine Anzeige im Display eines Handys oder eines PDAs handeln. Auch eine akustische oder andere Anzeige ist denkbar.

Alternativ oder zusätzlich kann vorgesehen sein, dass die Vergebührung und/oder die Bereitstellung von Diensten davon abhängt, ob sich das mobile Endgerät in dem ersten oder zweiten Betriebszustand befindet.

Weitere Einzelheiten und Vorteile der Erfindung werden anhand eines im Folgenden dargestellten Ausführungsbeispiel näher erläutert:

In einem Kommunikationssystem gemäß der Erfindung verfügen dessen Nutzer über Dual-Mode-Mobilfunkgeräte, die in einem ersten Betriebszustand gemäß einem Mobilfunkstandard (GSM oder UMTS) und in einem zweiten Betriebszustand gemäß WLAN /WIFI oder Bluetooth kommunizieren können. Selbstverständlich sind auch Triple-Mode-Mobilfunkgeräte (z.B. GSM/UMTS/WIFI) oder Mobilfunkgeräte einsetzbar, die mehr als drei Standards unterstützen.

Das Kommunikationssystem umfasst ferner Kommunikationseinheiten, die vorzugsweise tragbar ausgeführt sind. Die Tragbarkeit der Geräte ist jedoch keine zwingende Voraussetzung für die Realisierung der Erfindung.

Die Kommunikationseinheiten sind in den Wohnungen oder Büros der Nutzer des erfindungsgemäßen Telekommunikationsnetzes installiert. Sie verfügen jeweils über zwei Kommunikationsmodule, von denen eines die Kommunikation zwischen den Kommunikationseinheiten und den mobilen Endgeräten gemäß dem zweiten Kommunikationsstandard und das andere die Kommunikation zwischen einem Mobilfunknetz und den Kommunikationseinheiten gemäß dem weiteren Kommunikationsstandard abwickelt. Die Kommunikationseinheiten verfügen des Weiteren über ein Konvertierungsmittel, das die Signale der Kommunikationsstandards, in denen die Kommunikationseinheit kommuniziert, jeweils ineinander umsetzt.

In diesem Ausführungsbeispiel handelt es sich bei dem zweiten Kommunikationsstandard, in dem das mobile Endgerät und die Kommunikationseinheit kommunizieren, um WLAN und bei dem weiteren Kommunikationsstandard, in dem die Kommunikationseinheit mit dem Netz kommuniziert, um GSM oder UMTS.

Sobald sich das mobile Endgerät in Reichweite der Kommunikationseinheit befindet, wird das mobile Endgerät von dieser erkannt und es erfolgt ein Wechsel von dem ersten Betriebszustand, in dem das mobile Endgerät in dem GSM oder UMTS-Standard mit Sende- und Empfangsstationen eines Mobilfunknetzes kommuniziert, in den zweiten Betriebszustand, in dem das mobile Endgerät mit der Kommunikationseinheit mittels WLAN kommuniziert.

Verlässt das mobile Endgerät den von der Kommunikationseinheit abgedeckten Bereich, vollzieht sich in umgekehrter Richtung ein Wechsel von dem zweiten Betriebszustand in den ersten Betriebszustand, in dem das mobile Endgerät über das Mobilfunknetz, d.h. per GSM oder UMTS und nicht mit der Kommunikationseinheit kommuniziert.

In beiden Fällen (Wechsel von WLAN zu GSM/UMTS und Wechsel von GSM/UMTS zu WLAN) erfolgt ein Handover, so dass die Verbindung nahtlos aufrecht erhalten werden kann, ohne dass die Qualität der Verbindung beeinträchtigt wird.

Es sind Prüfmittel vorgesehen, die eine Prüfung vornehmen, ob sich das mobile Endgerät im Empfangsbereich des nach dem zweiten drahtlosen Kommunikationsstandard arbeitenden Systems befindet oder nicht. Befindet sich das mobile Endgerät in diesem Empfangsbereich, wird dies dem Nutzer mittels einer Anzeige im Display seines Gerätes angezeigt. Des Weiteren ist vorgesehen, dass in diesem Betriebszustand, d.h. wenn das mobile Endgerät nicht mit dem Mobilfunknetz, sondern mit der Kommunikationseinheit kommuniziert, eine Vergebührung vorgenommen wird, die günstiger als die Vergebührung ist, die angewandt wird, wenn das mobile Endgerät unmittelbar mit dem Mobilfunknetz kommuniziert.

## Patentansprüche

1. Kommunikationssystem mit wenigstens einem mobilen Endgerät, das in einem ersten Betriebszustand gemäß einem ersten Kommunikationsstandard eines drahtlosen Kommunikationssystems und in einem zweiten Betriebszustand gemäß einem zweiten Kommunikationsstandard eines drahtlosen Kommunikationssystems betreibbar ist, wobei es sich bei dem ersten Kommunikationsstandard um einen Mobilfunkstandard handelt, mit wenigstens einer Kommunikationseinheit, die über Sende- und Empfangsmittel verfügt, mittels derer die Kommunikationseinheit gemäß dem zweiten Kommunikationsstandard sowie gemäß einem weiteren Kommunikationsstandard betreibbar ist, und die Konvertierungsmittel aufweist, mittels derer die Signale des zweiten Kommunikationsstandards in Signale des weiteren Kommunikationsstandards und umgekehrt konvertierbar sind, sowie mit wenigstens einer Schalteinheit, mittels derer der erste oder der zweite Betriebszustand des mobilen Endgerätes aktivierbar ist,
**dadurch gekennzeichnet,**
**dass** die Kommunikationseinheit zwei Kommunikationsmodule aufweist, von denen eines die drahtlose Kommunikation zwischen der Kommunikationseinheit und dem mobilen Endgerät gemäß dem zweiten Kommunikationsstandard und das andere die drahtlose Kommunikation zwischen der Kommunikationseinheit und einem Mobilfunknetz gemäß dem weiteren Kommunikationsstandard abwickelt und
**dass** Mittel vorgesehen sind, die während der Nutzung des mobilen Endgerätes ein Handover beim Wechsel zwischen dem ersten und dem zweiten Kommunikationsstandard bereitstellen, wobei beim Handover eine Verbindung nahtlos aufrecht erhalten wird.

2. Kommunikationssystem nach Anspruch 1, **dadurch gekennzeichnet, dass** die Schalteinheit in Abhängigkeit der räumlichen Anordnung von mobilem Endgerät und der Kommunikationseinheit, insbesondere in Abhängigkeit der Entfernung zwischen mobilem Endgerät und der Kommunikationseinheit, eine Aktivierung des ersten oder des zweiten Betriebszustandes des mobilen Endgerätes vornimmt.

3. Kommunikationssystem nach Anspruch 1 oder 2, **dadurch gekennzeichnet, dass** der weitere Kommunikationsstandard dem ersten Kommunikationsstandard entspricht.

4. Kommunikationssystem nach Anspruch 1 oder 2, **dadurch gekennzeichnet, dass** es sich bei dem weiteren Kommunikationsstandard und bei dem ersten Kammunikationsstandard um unterschiedliche Kommunikationsstandards handelt.

5. Kommunikationssystem nach einem der vorhergehenden Ansprüche, **dadurch gekennzeichnet, dass** es sich bei dem ersten Kommunikationsstandard und/oder bei dem weiteren Kommunikationsstandard um die Mobilfunksstandards GSM oder UMTS handelt.

6. Kommunikationssystem nach einem der vorhergehenden Ansprüche, **dadurch gekennzeichnet, dass** die Reichweite des nach dem zweiten Kommunikationsstandard arbeitenden Kommunikationssystems geringer ist als die Reichweite des nach dem ersten Kommunikationsstandard arbeitenden Kommunikationssystems.

7. Kommunikationssystem nach einem der vorhergehenden Ansprüche, **dadurch gekennzeichnet, dass** die Reichweite des nach dem zweiten Kommunikationsstandard arbeitenden Kommunikationssystems geringer ist als die Reichweite des nach dem weiteren Kommunikationsstandard arbeitenden Kommunikationssystems.

8. Kommunikationssystem nach einem der vorhergehenden Ansprüche, **dadurch gekennzeichnet, dass** die Reichweite des nach dem zweiten Kommunikationsstandard arbeitenden Kommunikationssystems im Bereich bis 500 m, vorzugsweise im Bereich bis 200 m und besonders bevorzugt im Bereich bis 100 m liegt.

9. Kommunikationssystem nach einem der vorhergehenden Ansprüche, **dadurch gekennzeichnet, dass** es sich bei dem zweiten Kommunikationsstandard um WLAN bzw. WLAN/WIFI oder Bluetooth handelt.

10. Kommunikationssystem nach einem der vorhergehenden Ansprüche, **dadurch gekennzeichnet, dass** Prüfmittel vorgesehen sind, mittels derer prüfbar ist, ob sich das mobile Endgerät im Empfangsbereich des nach dem zweiten Kommunikationsstandard arbeitenden Kommunikationssystems befindet.

11. Kommunikationssystem nach Anspruch 10, **dadurch gekennzeichnet, dass** sich das Prüfmittel in dem mobilen Endgerät befindet.

12. Kommunikationssystem nach Anspruch 10 oder 11, **dadurch gekennzeichnet, dass** sich das Prüfmittel in einem Kommunikationsnetz befindet.

13. Kommunikationssystem nach einem der Ansprüche 10 bis 12, **dadurch gekennzeichnet, dass** Mittel vorgesehen sind, die in Abhängigkeit der in dem Prüfmittel vorgenommenen Prüfung ein für den Nutzer des mobilen Endgerätes wahrnehmbares Signal generieren.

14. Kommunikationssystem nach einem der Ansprüche 10 bis 13, **dadurch gekennzeichnet, dass** Mittel vorgesehen sind, die in Abhängigkeit der in dem Prüfmittel vorgenommenen Prüfung Einfluss auf die Vergebührung der mit dem mobilen Endgerät getätigten Telefonate und/oder auf die dem Nutzer zur Verfügung stehenden Dienstleistungen und Funktionalitäten nimmt.

15. Kommunikationssystem nach einem der vorhergehenden Ansprüche, **dadurch gekennzeichnet, dass** die Kommunikationseinheit ein oder mehrere austauschbare Module aufweist, die die drahtlose Kommunikation der Kommunikationseinheit gemäß dem zweiten und/oder gemäß dem weiteren Kommunikstionsstandard bewirken.

16. Kommunikationssystem nach einem der vorhergehenden Ansprüche, **dadurch gekennzeichnet, dass** die Kommunikationseinheit tragbar ausgeführt ist.

17. Kommunikationssystem nach einem der vorhergehenden Ansprüche, **dadurch gekennzeichnet, dass** die Kommunikationseinheit über eine eigene Stromversorgung verfügt und/oder an ein Stromnetz anschließbar ist.

18. Verfahren zum Betreiben eines Kommunikationssystems nach einem der Ansprüche 1 bis 17, **dadurch gekennzeichnet, dass** die Kommunikation mittels des mobilen Endgerätes in einem ersten Betriebszustand gemäß dem ersten Kommunikationsstandard und in einem zweiten Betriebszustand gemäß dem zweiten Kommunikationsstandard durchgeführt wird, wobei das mobile Endgerät in dem ersten Betriebszustand drahtlos mit einem Mobilfunknetz und in dem zweiten Betriebszustand drahtlos mit der Kommunikationseinheit kommuniziert, die die Signale des zweiten Kommunikationsstandards in die Signale des weiteren Kommunikationsstandards und umgekehrt konvertiert und die Signale des weiteren Kommunikationsstandards drahtlos an ein Mobilfunknetz sendet bzw. von diesem empfängt, wobei es sich bei dem ersten Kommunikationsstandard um einen Mobilfunkstandard handelt und wobei bei einem Wechsel von dem ersten in den zweiten Betriebszustand oder umgekehrt ein Handover vorgenommen wird, bei welchem eine Verbindung nahtlos aufrecht erhalten wird.

19. Verfahren nach Anspruch 18, **dadurch gekennzeichnet, dass** die Wahl des Betriebszustandes des mobilen Endgerätes von der Entfernung des mobilen Endgerätes von der Kommunikationseinheit abhängt.

20. Verfahren nach Anspruch 18 oder 19, **dadurch gekennzeichnet, dass** bei geringer Entfernung zwischen dem mobilen Endgerät und der Kommunikationseinheit das mobile Endgerät mit der Kommunikationseinheit gemäß dem zweiten Kommunikationsstandard kommuniziert und bei demgegenüber größerer Entfernung zwischen dem mobilen Endgerät und der Kommunikationseinheit das mobile Endgerät gemäß dem ersten Kommunikationsstandard ohne Nutzung der Kommunikationseinheit mit dem Mobilfunknetz kommuniziert.

21. Verfahren nach einem der Ansprüche 18 bis 20, **dadurch gekennzeichnet, dass** dem Nutzer des mobilen Endgerätes angezeigt wird, ob sich das mobile Endgerät in dem ersten oder zweiten Betriebszustand befindet.

22. Verfahren nach einem der Ansprüche 18 bis 21, **dadurch gekennzeichnet, dass** die Vergebührung und/oder die Bereitstellung von Dienstleistungen und Funktionalitäten davon abhängt, ob sich das mobile Endgerät in dem ersten oder zweiten Betriebszustand befindet.

## Claims

1. A communications system comprising at least one mobile device which can be operated in accordance with a first communications standard of a wireless communications system in a first operating state and which can be operated in accordance with a second communications standard of a wireless communications system in a second operating state, wherein the first communications standard is a mobile radio standard, comprising at least one communications unit which has transmission means and reception means by means of which the communications unit can be operated in accordance with the second communications standard and in accordance with a further communications standard and which has conversion means by means of which the signals of the second communications standard can be converted into signals of the further communications standard and vice versa, and comprising at least one switching unit by means of which the first or the second operating state of the mobile device can be activated.
**characterised in that**
the communications unit has two communications modules of which one processes the wireless communication between the communications unit and the mobile device in accordance with the second communications standard and the other processes the wireless communication between the communications unit and a mobile radio network in accordance with the further communications standard; and
**in that** means are provided which provide a handover on the change between the first and the second communications standard during use of the mobile device, with a connection being seamlessly maintained on the handover.

2. A communications system in accordance with claim 1, **characterised in that** the switching unit carries out an activation of the first or of the second operating state of the mobile device in dependence on the spatial arrangement of the mobile device and of the communications unit, in particular in dependence on the distance between the mobile device and the communications unit.

3. A communications system in accordance with either of claims 1 or 2, **characterised in that** the further communications standard corresponds to the first communications standard.

4. A communications system in accordance with either of claims 1 or 2, **characterised in that** the further communications standard and the first communications standard are different communications standards.

5. A communications system in accordance with one of the preceding claims, **characterised in that** the first communications standard and/or the further communications standard are the mobile radio standards GSM or UMTS.

6. A communications system in accordance with one of the preceding claims, **characterised in that** the range of the communications system working in accordance with the second communications standard is smaller than the range of the communications system working in accordance with the first communications standard.

7. A communications system in accordance with one of the preceding claims, **characterised in that** the range of the communications system working in accordance with the second communications standard is smaller than the range of the communications system working in accordance with the further communications standard.

8. A communications system in accordance with one of the preceding claims, **characterised in that** the range of the communications system working in accordance with the second communications standard is in the range up to 500 m, preferably in the range up to 200 m, and particularly preferably in the range up to 100 m.

9. A communications system in accordance with one of the preceding claims, **characterised in that** the second communications standard is WLAN or WLAN/WIFI or Bluetooth.

10. A communications system in accordance with one of the preceding claims, **characterised in that** check means are provided by means of which a check can be made whether the mobile device is in the reception range of the communications system working in accordance with the second communications standard.

11. A communications system in accordance with claim 10, **characterised in that** the check means is located in the mobile device.

12. A communications system in accordance with either of claims 10 or 11, **characterised in that** the check means is located in a communications network.

13. A communications system in accordance with one of the claims 10 to 12, **characterised in that** means are provided which generate a signal perceivable for the user of the mobile device in dependence on the check carried out in the check means.

14. A communications system in accordance with one of the claims 10 to 13, **characterised in that** means are provided which influence the charging rate of the telephone calls made using the mobile device and/or the services and functions available to the user in dependence on the check carried out in the check means.

15. A communications system in accordance with one of the preceding claims, **characterised in that** the communications unit has one or more replaceable modules which effect the wireless communication of the communications unit in accordance with the second communications standard and/or in accordance with the further communications standard.

16. A communications system in accordance with one of the preceding claims, **characterised in that** the communications unit is designed as portable.

17. A communications system in accordance with one of the preceding claims, **characterised in that** the communications unit has its own power supply and/or can be connected to a power supply system.

18. A method for operating a communications system in accordance with one of the claims 1 to 17, **characterised in that** the communication by means of the mobile device is carried out in accordance with the first communications standard in a first operating state and in accordance with the second communications standard in a second operating state, with the mobile device communicating wirelessly with a mobile radio network in the first operating state and communicating wirelessly with the communications unit in the second operating state, said communications unit converting the signals of the second communications standard into the signals of the further communications standard, and vice versa, and wirelessly transmitting the signals of the further communications standard to or receiving them from a mobile radio network, with the first communications standard being a mobile radio standard and with a handover being carried out on a change from the first operating state into the second operating state, and vice versa, on which handover a connection is seamlessly maintained.

19. A method in accordance with claim 18, **characterised in that** the selection of the operating standard of the mobile device depends on the distance of the mobile device from the communications unit.

20. A method in accordance with either of claims 18 or 19, **characterised in that**, on a small distance between the mobile device and the communications unit, the mobile device communicates with the communications unit in accordance with the second communications standard and, on a distance between the mobile device and the communications units which is larger with respect thereto, the mobile device communicates with the mobile radio network in accordance with the first communications standard without utilizing the communications unit.

21. A method in accordance with one of the claims 18 to 20, **characterised in that** it is indicated to the user of the mobile device whether the mobile device is in the first or the second operating state.

22. A method in accordance with one of the claims 18 to 21, **characterised in that** the charging rate and/or the provision of services and functions depends on whether the mobile device is in the first or the second operating state.

## Revendications

1. Système de communication avec au moins un terminal mobile, qui est exploitable dans un premier état de service selon un premier standard de communication d'un système de communication sans fil et dans un deuxième état de service selon un deuxième standard de communication d'un système de communication sans fil, sachant que, pour le premier standard de communication, il s'agit d'un standard de téléphonie mobile avec au moins une unité de communication, qui dispose de moyens d'émission et de réception, à l'aide desquels l'unité de communication est exploitable selon le deuxième standard de communication ainsi que selon un autre standard de communication, et qui présente des moyens de conversion, à l'aide desquels les signaux du deuxième standard de communication sont convertibles en signaux de l'autre standard de communication et inversement, ainsi qu'avec au moins une boîte de commutation, à l'aide de laquelle le premier ou le deuxième état de service du terminal mobile est activable,
**caractérisé en ce que**
l'unité de communication présente deux modules de communication, dont un traite la communication sans fil entre l'unité de communication et le terminal mobile selon le deuxième standard de communication et l'autre la communication sans fil entre l'unité de communication et un réseau de téléphonie mobile selon l'autre standard de communication et
**en ce que** des moyens sont prévus, qui, pendant l'utilisation du terminal mobile, fournissent un handover en cas de passage entre le premier et le deuxième standard de communication, une connexion étant maintenue sans fil pour le handover.

2. Système de communication selon la revendication 1, **caractérisé en ce que** la boîte de commutation effectue, en fonction de la disposition dans l'espace du terminal mobile et de l'unité de communication, notamment en fonction de la distance entre le terminal mobile et l'unité de communication, une activation du premier ou du deuxième état de service du terminal mobile.

3. Système de communication selon la revendication 1 ou 2, **caractérisé en ce que** l'autre standard de communication correspond au premier standard de communication.

4. Système de communication selon la revendication 1 ou 2, **caractérisé en ce que** pour l'autre standard de communication et pour le premier standard de communication, il s'agit de standards de communication différents.

5. Système de communication selon une quelconque des revendications précédentes, **caractérisé en ce que** pour le premier standard de communication et/ou pour l'autre standard de communication, il s'agit des standards de téléphonie mobile GSM ou UMTS.

6. Système de communication selon une quelconque des revendications précédentes, **caractérisé en ce que** le rayon d'action du système de communication fonctionnant selon le deuxième standard de communication est inférieur au rayon d'action du système de communication fonctionnant selon le premier standard de communication.

7. Système de communication selon une quelconque des revendications précédentes, **caractérisé en ce que** le rayon d'action du système de communication fonctionnant selon le deuxième standard de communication est inférieur au rayon d'action du système de communication fonctionnant selon l'autre standard de communication.

8. Système de communication selon une quelconque des revendications précédentes, **caractérisé en ce que** le rayon d'action du système de communication fonctionnant selon le deuxième standard de communication se trouve dans la zone jusqu'à 500 m, de préférence dans la zone jusqu'à 200 m et de préférence particulière dans la zone jusqu'à 100 m.

9. Système de communication selon une quelconque des revendications précédentes, **caractérisé en ce que**, pour le deuxième standard de communication, il s'agit de WLAN et/ou de WLAN/WIFI ou de Bluetooth.

10. Système de communication selon une quelconque des revendications précédentes, **caractérisé en ce que** des moyens de contrôle sont prévus, à l'aide desquels il est possible de contrôler si le terminal mobile se trouve dans la zone de réception du système de communication fonctionnant selon le deuxième standard de communication.

11. Système de communication selon la revendication 10, **caractérisé en ce que** le moyen de contrôle se trouve dans le terminal mobile.

12. Système de communication selon la revendication 10 ou 11, **caractérisé en ce que** le moyen de contrôle se trouve dans un réseau de communication.

13. Système de communication selon une quelconque des revendications 10 à 12, **caractérisé en ce que** des moyens sont prévus, qui en fonction du contrôle effectué dans le moyen de contrôle, génèrent un signal perceptible pour l'utilisateur du terminal mobile.

14. Système de communication selon une quelconque des revendications 10 à 13, **caractérisé en ce que** des moyens sont prévus, qui, en fonction du contrôle effectué dans le moyen de contrôle, prennent une influence sur la tarification des communications téléphoniques effectuées avec le terminal mobile et/ou sur les prestations de service et fonctionnalités étant à la disposition de l'utilisateur.

15. Système de communication selon une quelconque des revendications précédentes, **caractérisé en ce que** l'unité de communication présente un ou plusieurs modules interchangeables, qui effectuent la communication sans fil de l'unité de communication selon le deuxième et/ou selon l'autre standard de communication.

16. Système de communication selon une quelconque des revendications précédentes, **caractérisé en ce que** l'unité de communication est réalisée de manière portative.

17. Système de communication selon une quelconque des revendications précédentes, **caractérisé en ce que** l'unité de communication dispose d'une alimentation électrique individuelle et/ou est raccordable à un réseau électrique.

18. Procédé destiné à l'exploitation d'un système de communication selon une quelconque des revendications 1 à 17, **caractérisé en ce que** la communication à l'aide du terminal mobile est exécutée dans un premier état de service selon le premier standard de communication et dans un deuxième état de service selon le deuxième standard de communication, le terminal mobile communiquant au premier état de service sans fil avec un réseau de téléphonie mobile et au deuxième état de service sans fil avec l'unité de communication, qui convertit les signaux du deuxième standard de communication aux signaux de l'autre standard de communication et inversement, et envoie les signaux de l'autre standard de communication sans fil à un réseau de téléphonie mobile ou les reçoit de celui-ci, sachant que pour le premier standard de communication, il s'agit d'un standard de téléphonie mobile et sachant qu'en cas de passage du premier au deuxième état de service ou inversement un handover est effectué, pour lequel une connexion est maintenue sans fil.

19. Procédé selon la revendication 18, **caractérisé en ce que** le choix de l'état de service du terminal mobile dépend de la distance du terminal mobile à l'unité de communication.

20. Procédé selon la revendication 18 ou 19, **caractérisé en ce que** en cas de faible distance entre le terminal mobile et l'unité de communication, le terminal mobile communique avec l'unité de communication selon le deuxième standard de communication, et en revanche en cas de distance plus grande entre le terminal mobile et l'unité de communication, le terminal mobile selon le premier standard de communication communique avec le réseau de téléphonie mobile sans utilisation de l'unité de communication.

21. Procédé selon une quelconque des revendications 18 à 20, **caractérisé en ce qu'**il est affiché à l'utilisateur du terminal mobile si le terminal mobile se trouve au premier ou au deuxième état de service.

22. Procédé selon une quelconque des revendications 18 à 21, **caractérisé en ce que** la tarification et/ou la mise à disposition de prestations de service et de fonctionnalités dépend du fait que le terminal mobile se trouve au premier ou au deuxième état de service.
